# EUROPEAN PATENT APPLICATION

(11) **EP 4 811 083 A1**
(43) Date of publication of application: **23.09.2026**
(21) Application number: 24910177.5
(22) Date of filing: 18.10.2024
(51) Int. Cl.: G06F 3/041

(54) **TOUCH SCREEN POINT REPORTING RATE CONTROL METHOD, ELECTRONIC DEVICE, AND COMPUTER READABLE MEDIUM**

(30) Priority: 25.12.2023 CN 202311814852
(71) Applicant: ZTE CORPORATION, Shenzhen, Guangdong 518057 (CN)
(72) Inventor: WANG, Jianping, Shenzhen, Guangdong 518057 (CN)
(74) Representative: Canzler & Bergmeier Patentanwälte Partnerschaft mbB
(86) International application number: PCT/CN2024/125723
(87) International publication number: WO 2025/139235

(57) **Abstract**

The present application provides a touch screen point reporting rate control method, an electronic device, and a computer readable medium. The touch screen point reporting rate control method comprises: acquiring touch information of the current touch area; determining the next touch area on the basis of the touch information of the current touch area; and adjusting the point reporting rate of the next touch area.

## Description

### TECHNICAL FIELD

Embodiments of the present disclosure relate to the technical field of terminals, and in particular, to a method for controlling a point reporting rate of a touch screen, an electronic device, and a computer readable medium.

### BACKGROUND

At present, for a point reporting rate of a touch screen, there are typically a plurality of different frequencies such as 120 hertz (Hz), 180Hz, 240Hz, and 360Hz. In general, the point reporting rate of the touch screen can be dynamically switched across an entire touch screen. Although touch tracking experience of a user can be improved and touch experience of the user can be significantly improved after the point reporting rate of the touch screen is increased across the entire touch screen, power consumption of a terminal is increased, resulting in reduction of battery life of the terminal.

### SUMMARY

The embodiments of the present disclosure provide a method for controlling a point reporting rate of a touch screen, an electronic device, and a computer readable medium.

An embodiment of the present disclosure provides a method for controlling a point reporting rate of a touch screen, including: acquiring touch information of a current touch area, and determining a next touch area based on the touch information of the current touch area; and adjusting a point reporting rate of the next touch area.

An embodiment of the present disclosure provides an electronic device, including: at least one processor; and a storage device having stored therein at least one program which, when executed by the at least one processor, implements the method for controlling a point reporting rate of a touch screen according to the embodiments of the present disclosure.

An embodiment of the present disclosure provides a computer readable medium having stored therein a computer program which, when executed by a processor, implements the method for controlling a point reporting rate of a touch screen according to the embodiments of the present disclosure.

### BRIEF DESCRIPTION OF DRAWINGS

FIG. 1 is a flowchart illustrating a method for controlling a point reporting rate of a touch screen according to an embodiment of the present disclosure;
FIG. 2 is a schematic diagram illustrating determination of a target point reporting rate according to an embodiment of the present disclosure;
FIG. 3 is a schematic diagram illustrating an arrangement of physical capacitive touch sensors in a capacitive touch screen according to an embodiment of the present disclosure;
FIG. 4 is a schematic diagram illustrating conversion between a touch screen and a Liquid Crystal Display (LCD) according to an embodiment of the present disclosure;
FIG. 5 is a block diagram of an apparatus for controlling a point reporting rate of a touch screen according to an embodiment of the present disclosure; and
FIG. 6 is a block diagram of an electronic device according to an embodiment of the present disclosure.

### DETAIL DESCRIPTION OF EMBODIMENTS

In order to enable those of ordinary skill in the art to better understand the technical solutions of the present disclosure, a method for controlling a point reporting rate of a touch screen, an electronic device, and a computer readable medium provided in the present disclosure are described in detail below with reference to the drawings.

Exemplary embodiments will be described more fully below with reference to the drawings, but the exemplary embodiments described herein may be embodied in different forms and should not be interpreted as being limited to the embodiments described herein. Rather, the embodiments are provided to make the present disclosure thorough and complete, and are intended to enable those of ordinary skill in the art to fully understand the scope of the present disclosure.

The embodiments and the features therein in the present disclosure can be combined with each other if no conflict is incurred.

The term "and/or" used herein includes one associated listed item or any and all combinations of more than one associated listed item.

The terms used herein are merely used to describe specific embodiments, and are not intended to limit the present disclosure. As used herein, "a" and "the" which indicate a singular form are intended to include a plural form, unless the context clearly indicates otherwise. It should be further understood that the terms "comprise" and/or "be made of" used herein indicate the presence of the described features, integers, operations, elements and/or components, but do not exclude the presence or addition of at least one other feature, integer, operation, element, component and/or combination thereof.

Unless otherwise defined, all terms (including technical and scientific terms) used herein have the same meanings as commonly understood by those of ordinary skill in the art. It should be further understood that the terms, such as those defined in commonly used dictionaries, should be interpreted as having meanings that are consistent with those in the context of the related technology and the background of the present disclosure, and should not be interpreted in an idealized or overly formal sense unless expressly so defined herein.

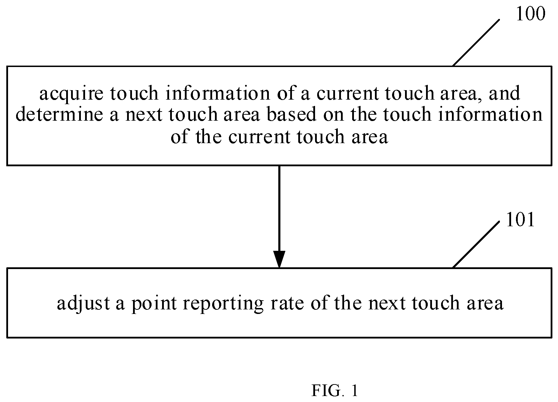

FIG. 1 is a flowchart illustrating a method for controlling a point reporting rate of a touch screen according to an embodiment of the present disclosure.

Referring to FIG. 1, an embodiment of the present disclosure provides a method for controlling a point reporting rate of a touch screen, including the following operations 100 and 101.

At operation 100, touch information of a current touch area is acquired, and a next touch area is determined based on the touch information of the current touch area.

In some exemplary embodiments, acquiring the touch information of the current touch area includes: acquiring the touch information of the current touch area based on at least one of a touch area of a user in a second preset time period, current application scenario information, currently started application information, or whether a second preset gesture is detected.

For example, the touch area of the user in the second preset time period is designated as the current touch area.

For example, a touch area, which is determined based on at least one of a user touch operation time or a user touch operation trajectory in the second preset time period and which satisfies a preset condition, is designated as the current touch area.

Specifically, the touch area which is determined based on at least one of the user touch operation time and the user touch operation trajectory in the second preset time period and satisfies the preset condition may be a touch area in which the user touch operation time is greater than or equal to a preset time threshold in the second preset time period, or a touch area in which a length of the user touch operation trajectory is greater than or equal to a preset length threshold in the second preset time period, or a touch area in which the user touch operation time is greater than or equal to the preset time threshold in the second preset time period and the length of the user touch operation trajectory is greater than or equal to the preset length threshold in the second preset time period.

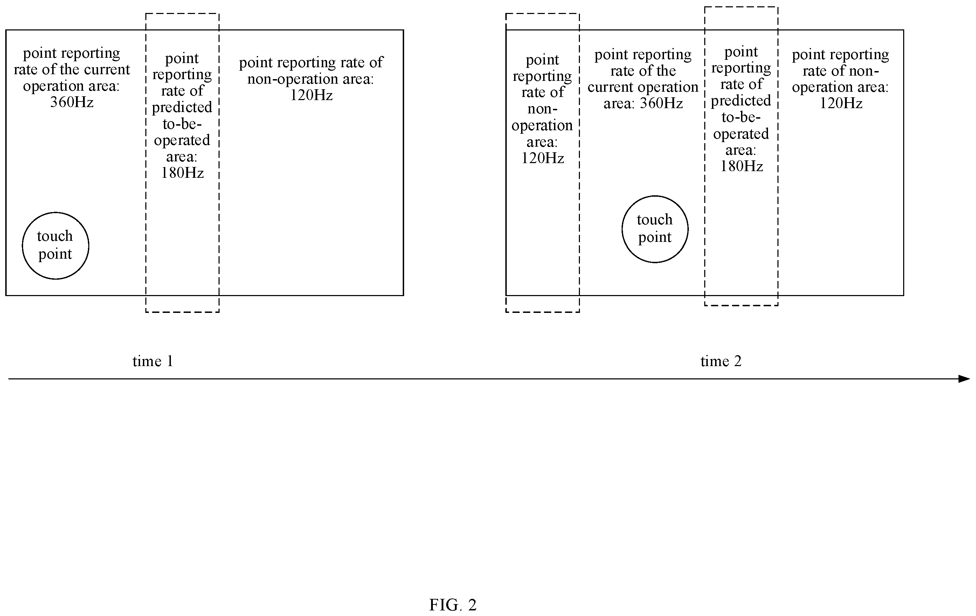

For example, as shown in FIG. 2, if a user clicks more than 4 times within 200 milliseconds (ms) and/or a distance that the user slides within 20ms exceeds 200 pixels in an area, the area may be designated as the current touch area.

For example, in a case where the current application scenario information is information of a certain application scenario, a touch area with a highest user operation frequency that is counted in the application scenario is designated as the current touch area.

For example, in a case where the currently started application information is information of a certain application, a touch area with a highest user operation frequency that is counted after the application is started is designated as the current touch area.

For example, in a case where the second preset gesture is detected, a touch area corresponding to the second preset gesture is searched for in a corresponding relationship between preset gestures and touch areas, and the found touch area is designated as the current touch area.

For example, an intersection of a touch area of the user in the second preset time period and a touch area with the highest user operation frequency that is counted in a certain application scenario in a case where the current application scenario information is the information of the application scenario is designated as the current touch area.

Touch areas in at least two other cases may also be combined to obtain the current touch area.

In some exemplary embodiments, the touch information of the current touch area includes position information of the current touch area.

In some exemplary embodiments, the touch information of the current touch area includes touch gesture information of the current touch area.

In some exemplary embodiments, the touch information of the current touch area includes: position information of the current touch area and touch gesture information of the current touch area.

In some exemplary embodiments, the position information may be at least one of position information of at least one vertex of a circumscribed rectangle of the current touch area or information of at least one side length of the circumscribed rectangle of the current touch area.

In some exemplary embodiments, the touch gesture information may be at least one of direction information of a touch gesture or trajectory length information of the touch gesture.

In some exemplary embodiments, determining the next touch area based on the touch information of the current touch area includes: determining, based on the position information of the current touch area, an area on the touch screen which has a distance to a boundary of the current touch area being less than or equal to a preset distance as the next touch area.

In some exemplary embodiments, the preset distance may be set based on a width of a human finger. For example, in a case where an area of x=(0, 530) is the current touch area, an area of x=(531, 689) may be determined as the next touch area.

In another example, in a case where an area of x=(583, 795) is the current touch area, an area of x=(477, 582) and an area of x=(796, 902) may be determined as the next touch areas.

In some exemplary embodiments, determining the next touch area based on the touch information of the current touch area includes: inputting the touch gesture information of the current touch area into a trained touch area prediction model to obtain position information of the next touch area, where the touch area prediction model is obtained by training based on historically collected historical touch gesture information of current touch area and corresponding historical position information of next touch area.

In some exemplary embodiments, determining the next touch area based on the touch information of the current touch area includes: predicting the next touch area based on the currently started application information.

In some exemplary embodiments, in a case where the currently started application information is the information of a certain application, determining a touch area, which has an intermediate user operation frequency that is counted after the application is started, as the next touch area.

In some exemplary embodiments, after acquiring the touch information of the current touch area and before determining the next touch area based on the touch information of the current touch area, the method further includes: determining whether a trigger condition is satisfied based on the touch information of the current touch area in a first preset time period; and in a case where the trigger condition is satisfied, the operation of determining the next touch area based on the touch information of the current touch area is performed repeatedly.

In some exemplary embodiments, determining whether the trigger condition is satisfied based on the touch information of the current touch area in the first preset time period includes: determining, based on the position information of the current touch area, whether the current touch area is always within a preset area range in the first preset time period; in a case where the current touch area is always within the preset area range in the first preset time period, determining that the trigger condition is not satisfied; and in a case where the current touch area is out of the preset area range in at least part of the first preset time period, determining that the trigger condition is satisfied.

In some exemplary embodiments, after acquiring the touch information of the current touch area, the method further includes: adjusting a point reporting rate of the current touch area.

In some exemplary embodiments, adjusting the point reporting rate of the current touch area includes: increasing the point reporting rate of the current touch area.

In some exemplary embodiments, after acquiring the touch information of the current touch area, the method further includes: determining whether a target point reporting rate of the current touch area is the same as a current point reporting rate of the current touch area; and in a case where the target point reporting rate of the current touch area is different from the current point reporting rate of the current touch area, the operation of adjusting the point reporting rate of the current touch area is preformed repeatedly.

In some exemplary embodiments, in a case where the target point reporting rate of the current touch area is the same as the current point reporting rate of the current touch area, the present process is ended.

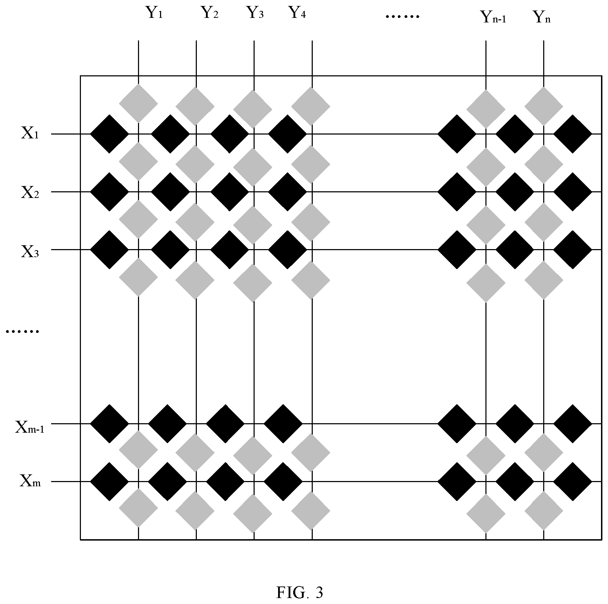

In some exemplary embodiments, in a case where the touch screen is a capacitive touch screen, as shown in FIG. 3, the capacitive touch screen may include a plurality of physical capacitive touch sensors arranged in m rows and n columns, and the plurality of physical capacitive touch sensors arranged in m rows and n columns in a staggered manner form m×n capacitive sensing points. When a finger of a user approaches the touch screen, a capacitance of the capacitive sensing point changes along with the approach of the finger. A distance between two adjacent physical capacitive touch sensors is typically around several millimeters, and determines a physical resolution of the touch screen as m×n.

Assuming that the m rows of physical capacitive touch sensors form transmitting end channels and the n columns of physical capacitive touch sensors form receiving end channels, the m rows are divided into A areas, with A=m/M, m being an integer multiple of M, and M being an integer greater than or equal to 1. By setting scanning frequencies for the transmitting end channels corresponding to a first area to an A^{th} area, different point reporting rates of all the areas may be obtained.

In some exemplary embodiments, increasing the point reporting rate of the current touch area includes: converting the position information of the current touch area into corresponding first touch control channel information; and setting a scanning frequency corresponding to the first touch control channel information as a scanning frequency corresponding to the target point reporting rate of the current touch area.

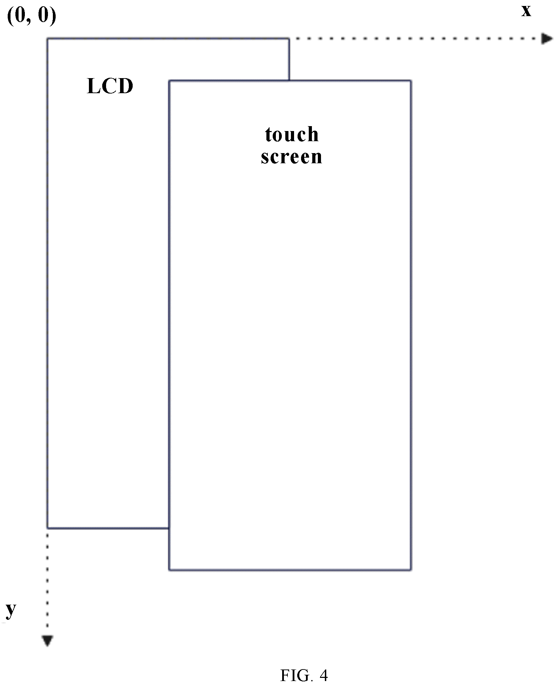

For example, as shown in FIG. 4, conversion is required because the plurality of physical capacitive touch sensors in m rows and n columns of the touch screen do not correspond to a display resolution of an LCD in a one-to-one correspondence. For example, if the display resolution of the LCD is Full High Definition (FHD) 1920×1080, a range corresponding to x-direction position information of the touch screen is [0, 1079], and a range corresponding to y-direction position information of the touch screen is [0, 1919].

Assuming that the number of transmitting end channels of the touch screen is 36 and the number of receiving end channels of the touch screen is 24, the touch screen may be divided into a maximum of 36 different areas theoretically, and a size of a display area corresponding to each area corresponds to a size of 1920/36=53 pixels, that is, the minimum number of display pixel columns available for point reporting rate adjustment is 53. In this example, a touch area may be an area formed by an integral multiple of 53 pixel columns.

In some exemplary embodiments, the first touch control channel information includes: a touch control channel row number or a touch control channel column number.

Returning to FIG. 1, at operation 101, a point reporting rate of the next touch area is adjusted.

In some exemplary embodiments, adjusting the point reporting rate of the next touch area includes: increasing the point reporting rate of the next touch area.

In some exemplary embodiments, increasing the point reporting rate of the next touch area includes: converting the position information of the next touch area into corresponding second touch control channel information; and setting a scanning frequency corresponding to the second touch control channel information as a scanning frequency corresponding to a target point reporting rate of the next touch area.

In some exemplary embodiments, the second touch control channel information includes: a touch control channel row number or a touch control channel column number.

In some exemplary embodiments, after acquiring the touch information of the current touch area, the method further includes: determining a specific touch area on the touch screen; and setting a point reporting rate of the specific touch area to 0.

In some exemplary embodiments, determining the specific touch area on the touch screen includes: determining the specific touch area based on at least one of the current application scenario information, the currently started application information, or whether a first preset gesture is detected.

For example, in a case where the current application scenario information is the information of a certain application scenario, a touch area which has a lowest user operation frequency that is counted in the application scenario is determined as the specific touch area.

For example, in a case where the currently started application information is the information of a certain application, a touch area which has a lowest user operation frequency that is counted after the application is started is determined as the specific touch area.

For example, in a case where the first preset gesture is detected, a touch area corresponding to the first preset gesture is searched for in the corresponding relationship between the preset gestures and the touch areas, and the found touch area is determined as the specific touch area.

In some exemplary embodiments, setting the point reporting rate of the specific touch area to 0 includes: converting position information of the specific touch area into corresponding third touch control channel information; and setting a scanning frequency corresponding to the third touch control channel information as a scanning frequency corresponding to a target point reporting rate of 0 of the specific touch area.

In some exemplary embodiments, the third touch control channel information includes: a touch control channel row number or a touch control channel column number.

In some exemplary embodiments, the target point reporting rate of the current touch area is higher than that of the next touch area.

In some exemplary embodiments, after determining the next touch area based on the touch information of the current touch area, the method further includes: adjusting point reporting rates of other touch areas except the current touch area and the next touch area on the touch screen.

In some exemplary embodiments, adjusting the point reporting rates of the other touch areas except the current touch area and the next touch area on the touch screen includes: reducing the point reporting rates of the other touch areas.

In some exemplary embodiments, reducing the point reporting rates of the other touch areas includes: converting position information of the other touch areas into corresponding fourth touch control channel information; and setting a scanning frequency corresponding to the fourth touch control channel information as scanning frequencies corresponding to target point reporting rates of the other touch areas.

In some exemplary embodiments, the fourth touch control channel information includes: a touch control channel row number or a touch control channel column number.

In some exemplary embodiments, the target point reporting rates of the other touch areas are lower than the target point reporting rate of the current touch area and the target point reporting rate of the next touch area.

In some exemplary embodiments, it is determined whether the target point reporting rates of the other touch areas are the same as current point reporting rates of the other touch areas; and in a case where the target point reporting rates of the other touch areas are different from the current point reporting rates of the other touch areas, the operation of adjusting the point reporting rates of the other touch areas except the current touch area and the next touch area on the touch screen is performed repeatedly.

In some exemplary embodiments, in a case where the target point reporting rates of the other touch areas are the same as the current point reporting rates of the other touch areas, the present process is ended.

With the method for controlling a point reporting rate of a touch screen provided in the embodiments of the present disclosure, prediction of the next touch area is achieved, the point reporting rate of the next touch area is adjusted accordingly, differentiation of the point reporting rates of the different touch areas on the touch screen is achieved, the point reporting rate of the touch screen for operation by the user is increased (that is, tracking experience during the operation of the touch screen by the user is improved), and system power consumption caused by setting of the point reporting rate of the touch screen is reduced.

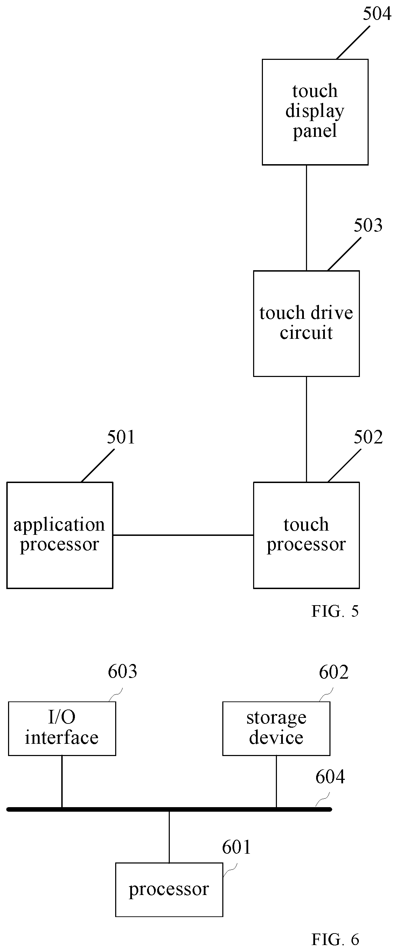

FIG. 5 is a block diagram of an apparatus for controlling a point reporting rate of a touch screen according to an embodiment of the present disclosure.

Referring to FIG. 5, an embodiment of the present disclosure provides an apparatus for controlling a point reporting rate of a touch screen, including: an application processor 501, a touch processor 502, a touch drive circuit 503, and a touch display panel 504.

The application processor 501 is configured to acquire touch information of a current touch area, determine a next touch area based on the touch information of the current touch area, and send position information of the next touch area to the touch processor 502.

The touch processor 502 is configured to adjust a point reporting rate of the next touch area based on the position information of the next touch area.

In some exemplary embodiments, the touch processor 502 is specifically configured to convert the position information of the next touch area into corresponding second touch control channel information in the touch drive circuit 503, and set a scanning frequency corresponding to the second touch control channel information as a scanning frequency corresponding to a target point reporting rate of the next touch area.

The touch drive circuit 503 is configured to control the touch display panel 504 for display based on the scanning frequency set by the touch processor 502.

In some exemplary embodiments, the application processor 501 is further configured to send position information of the current touch area to the touch processor 502.

The touch processor 502 is further configured to adjust a point reporting rate of the current touch area based on the position information of the current touch area.

In some exemplary embodiments, the touch processor 502 achieves adjusting the point reporting rate of the current touch area based on the position information of the current touch area in a following way: converting the position information of the current touch area into corresponding first touch control channel information in the touch drive circuit 503, and setting a scanning frequency corresponding to the first touch control channel information as a scanning frequency corresponding to a target point reporting rate of the current touch area.

In some exemplary embodiments, the application processor 501 is further configured to determine whether a trigger condition is satisfied based on the touch information of the current touch area in a first preset time period; and in a case where the trigger condition is satisfied, determining the next touch area based on the touch information of the current touch area, and sending the position information of the next touch area to the touch processor 502, where the target point reporting rate of the next touch area is lower than that of the current touch area.

The touch processor 502 is further configured to adjust the point reporting rate of the next touch area based on the position information of the next touch area.

In some exemplary embodiments, the application processor 501 is further configured to determine a specific touch area on the touch screen, and send position information and a point reporting rate of 0 of the specific touch area to the touch processor 502.

The touch processor 502 is further configured to set a point reporting rate of the specific touch area to 0 based on the position information of the specific touch area.

In some exemplary embodiments, the touch processor 502 achieves setting the point reporting rate of the specific touch area to 0 based on the position information of the specific touch area in the following way: converting the position information of the specific touch area into corresponding third touch control channel information in the touch drive circuit 503, and setting a scanning frequency corresponding to the third touch control channel information as a scanning frequency corresponding to a target point reporting rate of 0 of the specific touch area.

In some exemplary embodiments, the application processor 501 and the touch processor 502 communicate with each other via an Inter Integrated Circuit (I2C) or a Serial Peripheral Interface (SPI) bus.

In some exemplary embodiments, the application processor 501 sends the position information of the current touch area, the position information of the next touch area, position information of other touch areas, the position information of the specific touch area, and the point reporting rate of 0 to the touch processor 502 via the I2C or the SPI bus.

In some exemplary embodiments, the touch processor 502 is powered up and initialized with the application processor 501 during a boot phase.

In some exemplary embodiments, after the touch processor 502 detects external touch information, the touch processor 502 calculates position information of the touch, and sends interrupt information to the application processor 501 via the I2C or the SPI bus. After the application processor 501 detects an interrupt signal, the application processor 501 reads the position information of the touch via the I2C or an SPI bus interface, processes the position information of the touch, and performs subsequent processing.

Specific implementation processes of the above apparatus for controlling a point reporting rate of a touch screen are the same as those of the method for controlling a point reporting rate of a touch screen provided in the above embodiments, and will not be described here.

Referring to FIG. 6, another embodiment of the present disclosure provides an electronic device, including: at least one processor 601 and a storage device 602 having stored therein at least one program which, when executed by the at least one processor 601, implements the above method for controlling a point reporting rate of a touch screen.

In some exemplary embodiments, the electronic device may further include one or more input/output (I/O) interfaces 603 connected between the processor 601 and the storage device 602 and configured to enable information interaction between the processor 601 and the storage device 602.

The processor 601 is a device having a data processing capability, and includes, but is not limited to, a Central Processing Unit (CPU); the storage device 602 is a device having a data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write interface) 603 is connected between the processor 601 and the storage device 602, is capable of enabling the information interaction between the processor 601 and the storage device 602, and includes, but is not limited to, a data bus (Bus).

In some embodiments, the processor 601, the storage device 602, and the I/O interface 603 are connected to each other through a bus 604, and then are connected to other components of a computing device.

An embodiment of the present disclosure further provides a computer readable medium having stored therein a computer program which, when executed by a processor, implements the above method for controlling a point reporting rate of a touch screen.

It should be understood by those of ordinary skill in the art that the functional modules/units in all or some of the operations, the systems, and the devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules, and other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

## Claims

1. A method for controlling a point reporting rate of a touch screen, comprising:
acquiring touch information of a current touch area;
determining a next touch area based on the touch information of the current touch area; and
adjusting a point reporting rate of the next touch area.

2. The method for controlling the point reporting rate of the touch screen of claim 1, wherein adjusting the point reporting rate of the next touch area comprises:
increasing the point reporting rate of the next touch area.

3. The method for controlling the point reporting rate of the touch screen of claim 2, wherein the touch information of the current touch area comprises position information of the current touch area, and determining the next touch area based on the touch information of the current touch area comprises:
determining, based on the position information of the current touch area, an area on the touch screen which has a distance to a boundary of the current touch area being less than or equal to a preset distance as the next touch area.

4. The method for controlling the point reporting rate of the touch screen of claim 2, wherein the touch information of the current touch area comprises touch gesture information of the current touch area, and determining the next touch area based on the touch information of the current touch area comprises:
inputting the touch gesture information of the current touch area into a trained touch area prediction model to obtain position information of the next touch area,
wherein the touch area prediction model is obtained by training based on historically collected historical touch gesture information of current touch area and corresponding historical position information of next touch area.

5. The method for controlling the point reporting rate of the touch screen of claim 1, wherein after acquiring the touch information of the current touch area and before determining the next touch area based on the touch information of the current touch area, the method further comprises:
determining whether a trigger condition is satisfied based on the touch information of the current touch area in a first preset time period; and
in a case where the trigger condition is satisfied, repeatedly performing an operation of determining the next touch area based on the touch information of the current touch area.

6. The method for controlling the point reporting rate of the touch screen of claim 5, wherein the touch information of the current touch area comprises position information of the current touch area, and determining whether the trigger condition is satisfied based on the touch information of the current touch area in the first preset time period comprises:
determining, based on the position information of the current touch area, whether the current touch area is always within a preset area range in the first preset time period;
in a case where the current touch area is always within the preset area range in the first preset time period, determining that the trigger condition is not satisfied; and
in a case where the current touch area is out of the preset area range in at least part of the first preset time period, determining that the trigger condition is satisfied.

7. The method for controlling the point reporting rate of the touch screen of claim 1, after acquiring the touch information of the current touch area, the method further comprises:
determining a specific touch area on the touch screen; and
setting a point reporting rate of the specific touch area to 0.

8. The method for controlling the point reporting rate of the touch screen of claim 7, wherein determining the specific touch area on the touch screen comprises:
determining the specific touch area based on at least one of:
current application scenario information, currently started application information, or whether a first preset gesture is detected.

9. The method for controlling the point reporting rate of the touch screen of any one of claims 1 to 8, wherein acquiring the touch information of the current touch area comprises:
acquiring the touch information of the current touch area based on at least one of:
a touch area of a user in a second preset time period, current application scenario information, currently started application information, or whether a second preset gesture is detected.

10. An electronic device, comprising:
at least one processor; and
a storage device having stored therein at least one program which, when executed by the at least one processor, implements the method for controlling the point reporting rate of the touch screen of any one of claims 1 to 9.

11. A computer readable medium having stored therein a computer program which, when executed by a processor, implements the method for controlling the point reporting rate of the touch screen of any one of claims 1 to 9.
